# EUROPEAN PATENT APPLICATION

(11) **EP 2 541 296 A1**
(43) Date of publication of application: **02.01.2013**
(21) Application number: 11758774.1
(22) Date of filing: 17.03.2011
(51) Int. Cl.: G02B 6/42, H04B 10/24

(54) **UNLOCKING DEVICE FOR OPTICAL MODULE**

(30) Priority: 24.03.2010 CN 201020143119 U
(71) Applicant: Huawei Technologies Co., Ltd., Shenzhen, Guangdong 518129 (CN)
(72) Inventor: CHEN, Shirong, Shenzhen Guangdong 518129 (CN); QU, Wenbang, Shenzhen Guangdong 518129 (CN); PENG, Wanquan, Shenzhen Guangdong 518129 (CN); CUI, Zhenwei, Shenzhen Guangdong 518129 (CN); TANG, Fei, Shenzhen Guangdong 518129 (CN); MOU, Debing, Shenzhen Guangdong 518129 (CN); PENG, Zhe, Shenzhen Guangdong 518129 (CN)
(74) Representative: Maiwald Patentanwalts GmbH
(86) International application number: PCT/CN2011/071886
(87) International publication number: WO 2011/116664

(57) **Abstract**

The present invention relates to the field of communication transmission, and in particular, to an unlocking apparatus for an optical module. The unlocking apparatus includes a casting main body of the optical module, a spring, a sliding block, and a pulling ring; where a chute for accommodating the sliding block to slide is opened at the bottom of the casting main body; a groove for accommodating the spring is set in the middle of the sliding block; a limitation bump for preventing the spring from running over is set at a rear end of the chute; one end of the spring located in the groove of the sliding block abuts against the limitation bump; and the other end abuts against the sliding block, so that a front end surface of the sliding block wedged in the chute is in tight contact with the pulling ring; and a lower end of the pulling ring has an opening, where two sides of the opening are used as a rotation axis at the bottom of the casting main body for the pulling ring to rotate; and there is a bump on each of the two sides of the opening at the lower end of the pulling ring, so as to push the sliding block wedged in the chute to slide when the pulling ring is pulled. The unlocking apparatus for the optical module provided in the present invention is simple in structure and has fewer assembly components.

## Description

This application claims priority to Chinese Patent Application No. 201020143119.1, filed with the Chinese Patent Office on March 24, 2010 and entitled "UNLOCKING APPARATUS FOR OPTICAL MODULE", which is incorporated herein by reference in its entirety.

### FIELD OF THE INVENTION

The present invention relates to the field of communication transmission, and in particular, to an unlocking apparatus for an optical module.

### BACKGROUND OF THE INVENTION

An SFP (Small Form-Factor Pluggable, small form-factor pluggable) transceiver optical module provides a function of data transmission in an optical communication system, has a feature of a high transmission rate and a small size, especially has a feature of hot plugging, and brings convenience for a user. With the development of the optical communication industry to high capacity, a transmission rate of a system and external interface density of a device show a tendency to continuously increase. As an external interface component of a system device, the SFP transceiver optical module has necessity of developing towards subminiaturization. During the development of the SFP transceiver optical module towards subminiaturization, design of an unlocking apparatus of the SFP transceiver optical module affects its degree of development towards miniaturization.

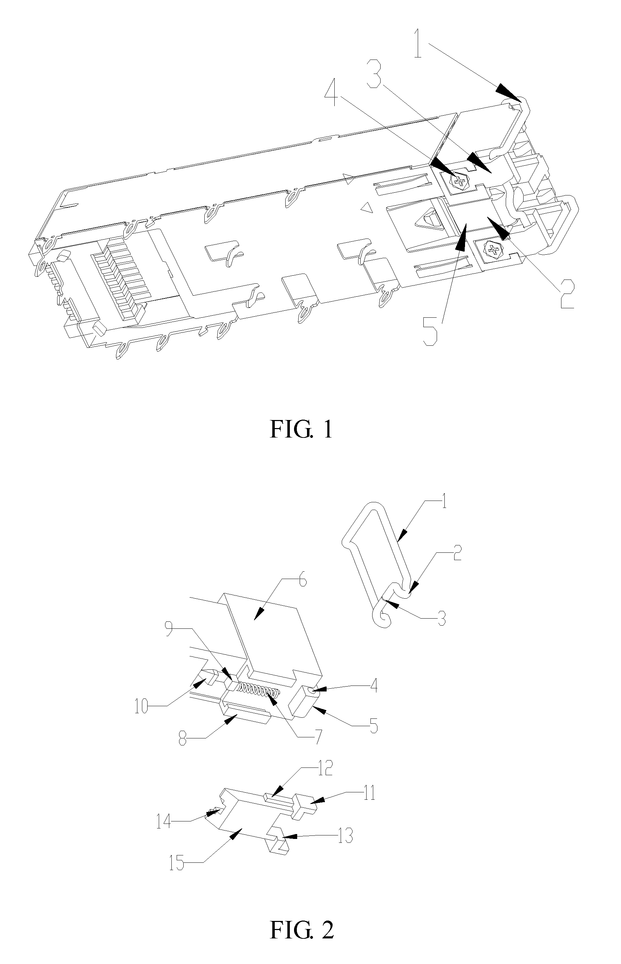

The prior art provides an unlocking apparatus for the SFP transceiver optical module. Its structure is as shown in FIG. 1, including: a pulling ring 1, a jacket, a sliding block 2, a spring, two sheets 3, and two screws 4. A chute 5 for accommodating the sliding block 2 to slide is opened in the middle of an end of a pedestal of the unlocking apparatus, and a lower groove for accommodating the spring is opened in the center of the chute 5. The sheets 3 on two sides are fixed onto the pedestal by the screws 4, the pulling ring 1 is sleeved inside the sheets 3, and the center of its rotation joint axis is bended to form a cam apparatus. When the optical module is unlocked, the pulling ring 1 is pulled, and its cam apparatus pushes the sliding block 2 to push a metal cage open, implementing unlocking of the optical module from the metal cage.

The unlocking apparatus shown in FIG. 1 requires a lot of components and uses screws for installation. In addition, a formation of the pulling ring is complex, occupying large space. These restrict the development of the SFP optical module towards subminiaturization, and meanwhile result in complexity of assembling and increase the cost.

### SUMMARY OF THE INVENTION

Embodiments of the present invention provide an unlocking apparatus for an optical module, including:
a casting main body of the optical module, a spring, a sliding block, and a pulling ring; where
a chute for accommodating the sliding block to slide is opened at the bottom of the casting main body; a groove for accommodating the spring is set in the middle of the sliding block; a limitation bump for preventing the spring from running over is set at a rear end of the chute; one end of the spring located in the groove of the sliding block abuts against the limitation bump; and the other end abuts against the sliding block, so that a front end surface of the sliding block wedged in the chute is in tight contact with a lower end of the pulling ring; and
the lower end of the pulling ring has an opening, where two sides of the opening are used as a rotation axis at the bottom of the casting main body for the pulling ring to rotate; and there is a bump near each of the two sides of the opening at the lower end of the pulling ring, so as to push the sliding block wedged in the chute to slide when the pulling ring is pulled.

The unlocking apparatus for the optical module provided in the present invention, is simple in structure, leaves out components such as a screw and a jacket, and greatly reduces space occupied by the unlocking apparatus, thereby creating a condition for the optical module to develop towards subminiaturization. Meanwhile, because the unlocking apparatus for the optical module provided in the present invention is simple in structure and leaves out components such as the screw, assembling efficiency and the production efficiency are greatly improved, and the production cost is reduced.

### BRIEF DESCRIPTION OF THE DRAWINGS

To illustrate the technical solutions in embodiments of the present invention or in the prior art more clearly, accompanying drawings for describing the embodiments of the present invention or in the prior art are briefly introduced below. Obviously, the accompanying drawings are only some embodiments of the present invention, and persons of ordinary skill in the art may obtain other drawings from these accompanying drawings without making creative efforts.
FIG. 1 is a three-dimensional diagram of an unlocking apparatus for an optical module in the prior art;
FIG. 2 is an exploded diagram of components of an unlocking apparatus for an optical module according to a first embodiment of the present invention;
FIG. 3 is a schematic appearance diagram of the unlocking apparatus for the optical module in a locked state according to the first embodiment of the present invention;
FIG. 4 is a schematic appearance diagram of the unlocking apparatus for the optical module in an unlocked state according to the first embodiment of the present invention;
FIG. 5 is an exploded diagram of components of an unlocking apparatus for an optical module according to a second embodiment of the present invention;
FIG. 6 is a schematic appearance diagram of the unlocking apparatus for the optical module in a locked state according to the second embodiment of the present invention; and
FIG. 7 is a schematic appearance diagram of the unlocking apparatus for the optical module in an unlocked state according to the second embodiment of the present invention.

### DETAILED DESCRIPTION OF THE EMBODIMENTS

The technical solutions in embodiments of the present invention are clearly and completely described in the following with reference to the accompanying drawings of the present invention. Obviously, the embodiments described are only part of rather than all of the embodiments of the present invention. All other embodiments obtained by persons of ordinary skill in the art based on the embodiments of the present invention without making creative effects shall fall within the protection scope of the present invention.

To make the objectives, technical solutions, and advantages of the present invention clearer, implementation manners of the present invention are described in the following with reference to the accompanying drawings.

An unlocking apparatus for an optical module provided in the present invention is configured to implement unlocking of the optical module from a metal cage on a device.

The present invention provides an unlocking apparatus for an optical module, including:
a casting main body of the optical module, a spring, a sliding block, and a pulling ring; where
a chute for accommodating the sliding block to slide is opened in the bottom of the casting main body; a groove for accommodating the spring is set in the middle of the sliding block; a limitation bump for preventing the spring from running over is set at a rear end of the chute; one end of the spring located in the groove of the sliding block abuts against the limitation bump; and the other end abuts against the sliding block, so that a front end surface of the sliding block wedged in the chute is in tight contact with the pulling ring; and
a lower end of the pulling ring has an opening, where two sides of the opening are used as a rotation axis at the bottom of the casting main body for the pulling ring to rotate; and there is a bump near each of the two sides of the opening at the lower end of the pulling ring, so as to push the sliding block wedged in the chute to slide when the pulling ring is pulled, so that the metal cage is pushed open and the optical module is unlocked from the metal cage.

For better understanding and implementation of the unlocking apparatus for the optical module provided in the present invention, specific embodiments are uses for further description in the following.

A first embodiment of the present invention provides an unlocking apparatus for an optical module. FIG. 2 shows an exploded diagram of components of the unlocking apparatus. The unlocking apparatus includes: a casting main body 6 of the optical module, a spring 7, a sliding block 15, and a pulling ring 1.

A chute 8 for accommodating the sliding block 15 to slide is set at the bottom of the casting main body 6, a limitation bump 9 for preventing the spring 7 from running over is set at a rear end of the chute 8, a wedge lock 10 of the optical module is set at a rear end of the limitation bump 9, a boss 5 is set at a front end of the chute 8, and a through hole 4 is opened on two sides of the boss 5.

A groove 14 for accommodating the spring 7 is set in the middle of the bottom of the sliding block 15, the sliding block 15 is placed inside the chute 8, and raised bars 12 on two sides of the sliding block 15 are coupled to slots on two sides of the chute 8.

A lower end of the pulling ring 1 has an opening 3. Two sides of the opening 3 are used as a rotation axis in the through hole 4 on the boss 5 for the pulling ring 1 to rotate. There is a bump 2 near each of the two sides of the opening 3 at the lower end of the pulling ring 1, where the bump 2 pushes the sliding block 15 wedged in the chute 8 to slide when the pulling ring 1 is pulled.

After the components shown in FIG. 2 are assembled, one end of the spring 7 in the groove 14 abuts against the limitation bump 9, and the other end abuts against the sliding block 15, so that a front end surface of the sliding block 15 is in tight contact with the bumps 2 near the two sides of the opening 3 at the lower end of the pulling ring 1. During implementation of unlocking the optical module from a metal cage, the pulling ring 1 is pulled, the bumps 2 at the lower end of the pulling ring 1 push the sliding block 15 in tight contact with the bumps to move towards the rear end so as to push the metal cage open, unlocking the optical module from the metal cage.

To prevent the metal pulling ring 1 inserted into the through hole 4 on the boss 5 from being pulled off, a half-opened window 13 may be set in the middle at a front end of the sliding block 15 to avoid the boss 5. Two sides 11 at the front end of the sliding block 15 are extended to protect the pulling ring 1, and prevent the pulling ring 1 from being pulled off.

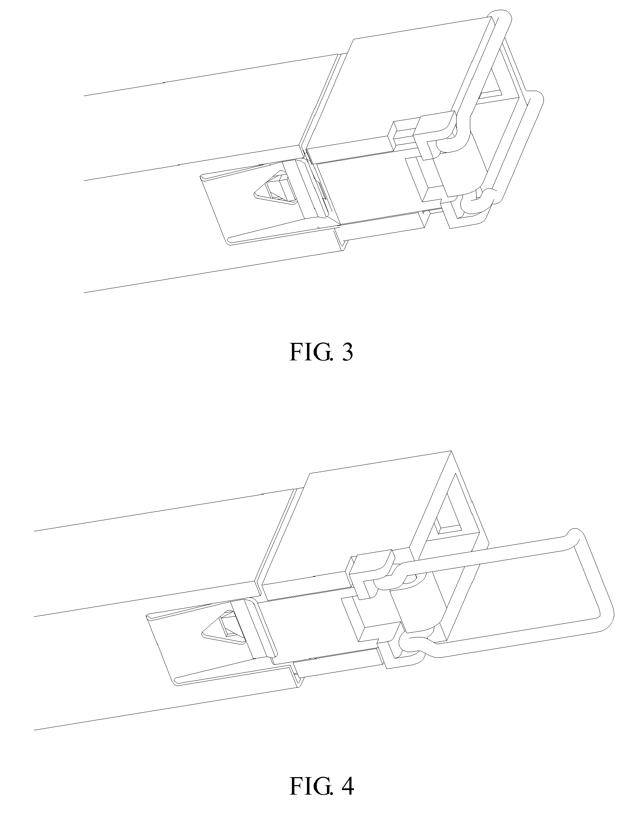

FIG. 3 shows a schematic appearance diagram of the unlocking apparatus for the optical module in a locked state after the components in FIG. 2 are assembled.

FIG. 4 is shows schematic appearance diagram of the unlocking apparatus for the optical module in an unlocked state after the components in FIG. 2 are assembled.

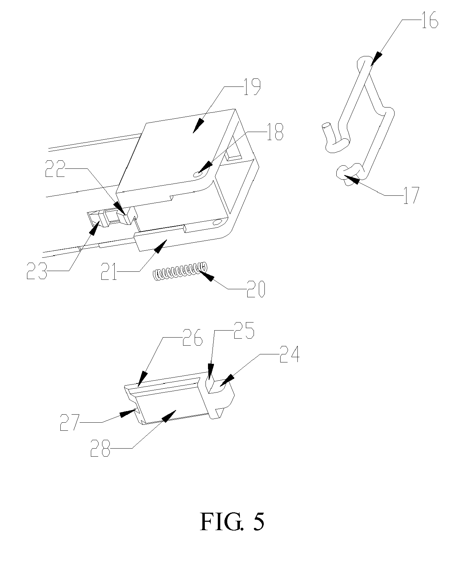

A second embodiment of the present invention provides an unlocking apparatus for an optical module. FIG. 5 shows an exploded diagram of components of the unlocking apparatus. The unlocking apparatus includes: a casting main body 19 of the optical module, a spring 20, a sliding block 28, and a pulling ring 16.

A chute 21 for accommodating the sliding block 28 to slide is set in the bottom of the casting main body 19, a limitation bump 22 for preventing the spring from running over is set at a rear end of the chute 21, a wedge lock 23 of the optical module is set at a rear end of the limitation bump 22, and a hole 18 is opened on each of two sides at a front end of the chute 21.

A groove 27 for accommodating the spring 20 is set in the middle of the bottom of the sliding block 28, the sliding block is placed inside the chute 21, and sliding bars 26 on two sides of the sliding block are coupled to slots on the two sides of the chute 21.

A lower end of the pulling ring 16 has an opening, and two sides of the opening form outward an L shape which is inserted into the holes 18 on the sides of the chute as a rotation axis for the pulling ring 16 to rotate. There is a bump 17 near each of the two sides of the opening at the lower end of the pulling ring 16, where the bumps 17 push the sliding block 28 wedged in the chute to slide when the pulling ring 16 is pulled.

After the components shown in FIG. 5 are assembled, one end of the spring 20 in the groove 27 abuts against the limitation bump 22, and the other end abuts against the sliding block 28, so that a front end surface 25 of the sliding block 28 is in tight contact with the bumps 17 near the two sides of the opening at the lower end of the pulling ring 16. During implementation of unlocking the optical module from a metal cage, the pulling ring 16 is pulled, the bumps 17 at the lower end of the pulling ring 16 push the sliding block 28 in tight contact with the bumps to move towards the rear end along the chute 21 so as to push the metal cage open, unlocking the optical module from the metal cage.

To prevent the pulling ring 16 inserted into the holes 18 on the two sides at the front end of the chute 21 from being pulled off, the sliding block 28 may be further designed as follows: A middle part at a front end of the sliding block 28 protrudes forward, a protruding part 24 is exactly placed at the opening at the lower end of the pulling ring 16 so as to block the pulling ring 16, preventing the pulling ring 16 from being pulling off.

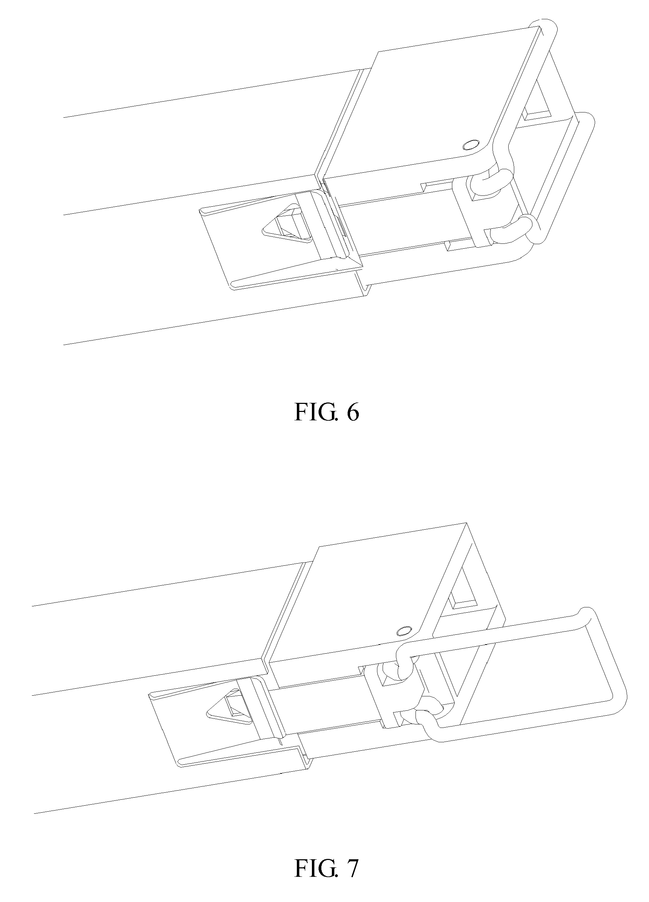

FIG. 6 shows a schematic appearance diagram of the unlocking apparatus for the optical module in a locked state after the components in FIG. 5 are assembled.

FIG. 7 shows a schematic appearance diagram of the unlocking apparatus for the optical module in an unlocked state after the components in FIG. 5 are assembled.

It can be seen from the foregoing embodiments that the unlocking apparatus for the optical module provided in the present invention does not require components such as a screw and a jacket, is simple in structure, and creates a condition for the optical module to develop towards subminiaturization. In addition, its production cost is greatly reduced and assembling efficiency is highly improved.

The foregoing descriptions are merely exemplary implementation manners of the present invention. The protection scope of the present invention is not limited here. Variations or replacements that may be easily thought of by persons skilled in the art without departing from the technical scope of the present invention shall fall within the protection scope of the present invention. Therefore, the protection scope of the present invention is subject to the protection scope of the claims.

## Claims

1. An unlocking apparatus for an optical module, comprising:
a casting main body of the optical module, a spring, a sliding block, and a pulling ring; wherein
a chute for accommodating the sliding block to slide is opened at the bottom of the casting main body; a groove for accommodating the spring is set in the middle of the sliding block; a limitation bump for preventing the spring from running over is set at a rear end of the chute; one end of the spring located in the groove of the sliding block abuts against the limitation bump; and the other end abuts against the sliding block, so that a front end surface of the sliding block wedged in the chute is in tight contact with a lower end of the pulling ring; and
the lower end of the pulling ring has an opening, wherein two sides of the opening are used as a rotation axis at the bottom of the casting main body for the pulling ring to rotate; and there is a bump near each of the two sides of the opening at the lower end of the pulling ring, so as to push the sliding block wedged in the chute to slide when the pulling ring is pulled.

2. The apparatus according to claim 1, wherein a boss for installing the pulling ring is set at a front end of the chute, a through hole is opened on two sides of the boss, and the two sides of the opening at the lower end of the pulling ring are used as the rotation axis in the through hole for the pulling ring to rotate.

3. The apparatus according to claim 2, wherein a middle part at a front end of the sliding block is half-windowed to avoid the boss, and two sides of the front end of the sliding block are extended to protect the pulling ring.

4. The apparatus according to claim 1, wherein the two sides of the opening at the lower end of the pulling ring form outward an L shape which is inserted into holes on the sides of the casting main body as the rotation axis for the pulling ring to rotate.

5. The apparatus according to claim 4, wherein a middle part at a front end of the sliding block protrudes forward, and the protruding part is placed at the opening at the lower end of the pulling ring to block the pulling ring.
